(19) Europäisches Patentamt
European Patent Office
Office européen des brevets

(11) Veröffentlichungsnummer : **0 110 267 B1**

(12) **EUROPÄISCHE PATENTSCHRIFT**

(45) Veröffentlichungstag der Patentschrift : **30.09.87**

(51) Int. Cl.⁴ : **C 08 G 63/18**, C 08 G 63/66, D 06 M 15/507, C 08 L 67/02

(21) Anmeldenummer : **83111577.9**

(22) Anmeldetag : **19.11.83**

# (54) In Wasser dispergierbarer Polyester, seine Herstellung und Verwendung als Hydrophilierungsmittel.

(30) Priorität : **27.11.82 DE 3244011**

(43) Veröffentlichungstag der Anmeldung : **13.06.84 Patentblatt 84/24**

(45) Bekanntmachung des Hinweises auf die Patenterteilung : **30.09.87 Patentblatt 87/40**

(84) Benannte Vertragsstaaten : **CH DE FR GB LI NL**

(56) Entgegenhaltungen :
**EP-A- 0 049 823**
**BE-A- 667 249**
**DE-A- 2 456 536**
**FR-A- 1 502 969**
**US-A- 3 310 512**
**US-A- 4 122 073**
**US-A- 4 370 143**
**PATENT ABSTRACTS OF JAPAN, Band 8, Nr. 3, 7. Januar 1984, (C-203 (1440).**

(73) Patentinhaber : **CASSELLA Aktiengesellschaft**
**Hanauer Landstrasse 526**
**D-6000 Frankfurt am Main 61 (DE)**

(72) Erfinder : **Engelhardt, Friedrich, Dr.**
**Hünfelder Strasse 20**
**D-6000 Frankfurt am Main 61 (DE)**
Erfinder : **Hintermeier, Karl, Dr.**
**Hünfelder Strasse 18**
**D-6000 Frankfurt am Main 61 (DE)**
Erfinder : **Smerz, Otto, Dr.**
**Ph.-Kremer-Strasse 29**
**D-6233 Kelkheim/Ts. (DE)**
Erfinder : **Wagener, Hans**
**Am Lotzenwald 8**
**D-6238 Hofheim/Ts. (DE)**

(74) Vertreter : **Urbach, Hans-Georg, Dr. et al**
**Hanauer Landstrasse 526**
**D-6000 Frankfurt am Main 61 (DE)**

**EP 0 110 267 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft einen in Wasser dispergierbaren Polyester, aufgebaut aus Baugruppen der Formel

—CO—A—CO—O—G—O—

worin A überwiegend p-Phenylen und G überwiegend zweiwertige Reste von Alkanen mit 3 bis 6 C-Atomen bedeuten, seine Herstellung und seine Verwendung zur Verbesserung der Anwendungseigenschaften von hydrophoben Fasermaterialien.

Polyester sind in verschiedenen Zusammensetzungen bereits bekannt. So betrifft die EP-A1-49 823 ein segmentiertes thermoplastisches Copolyester-Elastomeres, das aus einer Vielzahl von wiederkehrenden langkettigen und kurzkettigen Estereinheiten besteht, die Kopf an Schwanz durch Esterbindungen verknüpft sind. Die langkettigen Estereinheiten sind dabei aus einem difunktionalen Polyetherglykol mit einem Molekulargewicht von 400 bis 6 000 und Terephthalsäure oder Isophthalsäure entstanden, die kurzkettigen Estereinheiten sind dabei aus Terephthalsäure oder Isophthalsäure und 1,4-Butan- oder 1,4-Buten-diol entstanden, wobei das Copolyester-Elastomeres 30 bis 85 Gew.% kurzkettige Einheiten enthält, wobei 10 bis 40 % der kurzkettigen Einheiten Reste des 1,4-Butendiols enthalten. Diese Elastomere besitzen eine verbesserte thermische Stabilität und einen verbesserten Sauerstoffindex und werden zur Herstellung von Formkörpern benutzt. In der EP-A1-49 823 ist zum Vergleich auch ein Polyester offenbart, der aus 0,5 mol Dimethylterephthalat, 0,44 mol 1,4-Butandiol und 0,06 mol Polytetramethylenglykol vom Molekulargewicht 1 000 hergestellt worden ist.

Aus der JP-A-58 173 122 ist ein Polyester-Copolymeres bekannt, das hydrophile Eigenschaften und Dispergierbarkeit in Wasser besitzt und das Polyesterfasern dauerhafte hydrophile Eigenschaften verleiht. Dieser Polyester ist aufgebaut aus Resten : (A) der Therephthalsäure, (B) einer von Terephthalsäure verschiedenen Dicarbonsäure, (C) eines 2 bis 6 C-Alkylglykols, (D) eines Polyalkylenglykols, (E) eines an einem Ende blockierten Polyalkylenglykols, wie z. B. Polyethylenglykol-monophenylether.

Die DE-A-24 56 536 betrifft ein segmentiertes thermoplastisches Copolyesterelastomeres für die Herstellung von z. B. Stoßdämpfern, gestrichenen Geweben und Niederdruckrohren und anderen Anwendungsformen, welche eine geringe Härte und einen niederen Modul gemeinsam mit hoher Reißfestigkeit, hohen Schmelzpunkten, rascher Kristallisationsgeschwindigkeit und Flexibilität erfordern. Das Copolyesterelastomeres besteht im wesentlichen aus einer Vielzahl von wiederkehrenden langkettigen Estereinheiten, die Kopf-an-Schwanz über Esterbindungen miteinander verbunden sind. Von diesen Estereinheiten muß mindestens eine einen zweiwertigen Rest enthalten, der mindestens eine Seitenkette mit einer Länge von 7 bis etwa 25 C-Atomen enthält und der nach Entfernung der Carboxylgruppen von einer aliphatischen Dicarbonsäure mit einem Molekulargewicht von weniger als etwa 300 (die Seitenkette nicht gerechnet) verbleibt.

Die US-A-3 310 512 betrifft nach ihrem Anspruch 1 ein Verfahren zur Herstellung eines wasserdispergierbaren Polyesterharzes, wobei (a) Isophthalsäure oder Terephthalsäure, (b) eine nichtoxydierende aliphatische Dicarbonsäure mit 14 bis 18 C-Atomen, (c) Polyethylenglykol oder Polypropylenglykol mit einem Molekulargewicht von 600 bis 6 000, (d) mindestens ein gesättigter mehrwertiger Alkohol mit 2 bis 16 C-Atomen und mindestens drei Hydroxylgruppen bis zu einer Säurezahl von kleiner als 30 verestert werden, wobei insgesamt 0,95 bis 1,8 Mole Polyole pro Mol Dicarbonsäure eingesetzt werden.

Im britischen Patent 1 088 984 der ICI werden in Wasser dispergierbare Polyester, die durch Modifizierung von Polyethylenterephthalat mittels hydrophiler Komponenten erhalten werden, zur Nachbehandlung von Polyesterartikeln beschrieben. Dieses Patent umfaßt auch die behandelte Faser als Ganzes, sowie eine Wärmebehandlung bei Temperaturen über 90 °C. Als wesentliches, patentbestimmendes Merkmal wird angegeben, daß die zur Behandlung verwendeten, überwiegend linearen PES mehr oder weniger große Polyethylenterephthalat-Segmente enthalten müssen, also Abschnitte, die chemisch mit der zu behandelnden Faser identisch sind, damit ein « Ankristallisieren » möglich wird, welches man zum Erreichen einer ausreichenden Fixierung für nötig hielt.

Nachbehandlungsmittel, die speziell zur antistatischen Ausrüstung, d. h. zur Herabsetzung des elektrischen Oberflächenwiderstandes von hydrophoben Fasermaterialien verwendet werden und die in der Mehrzahl auf salzartigen organischen Ammoniumverbindungen basieren, sind ebenfalls bereits in großer Zahl vorgeschlagen worden. Eine Übersicht hierzu bietet die Monographie « K. Lindner, Tenside-Textilhilfsmittel, Waschrohstoffe », Wissenschaftliche Verlagsgesellschaft mbH Stuttgart (1971), Seiten 2592-2599. Trotz der zahlreichen Vorschläge ist nur eine geringe Zahl von Handelsprodukten in die Praxis eingeführt worden. Auch spezielle Soil-Release-Hilfsmittel, vorzugsweise auf der Basis fluorierter organischer Verbindungen, sind bereits bekannt.

Diese bekannten Verbindungen weisen jedoch noch z. T. erhebliche Nachteile auf. So sind die speziell als Antistatika eingesetzten Mittel noch nicht hinreichend waschecht, und die fluorhaltigen Soil-Release-Mittel können zu Nachteilen bezüglich der Oberflächenleitfähigkeit führen.

Weitere Unzulänglichkeiten bestehen bei der Anwendung bekannter Mittel, z. B. in Veränderungen des Griffs, im Wasseraufnahmevermögen, in der Anschmutzung oder in einer ungenügenden oder allzu

einseitigen Wirkung.

Es wurde nun überraschenderweise gefunden, daß man Hydrophilierungsmittel erhält, die gegenüber bekannten, handelsüblichen Mitteln verbesserte Effekte ergeben, u. a. bezüglich der Antistatik, des Saugvermögens, der Naßanschmutzung, aber auch der Waschpermanenz.

Die vorliegende Erfindung betrifft einen in Wasser dispergierbaren Polyester, der aus Baugruppen der Formel I

$$—CO—A—CO—O—G—O— \qquad (I)$$

aufgebaut ist, wobei

A im statistischen Mittel zu 80 bis 97 Mol% p-Phenylen und zu 3 bis 20 Mol% zweiwertige Reste der Formel II

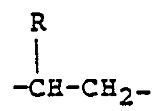

(II)

und

G im statistischen Mittel zu 30 bis 90 Mol% geradlinige oder verzweigte zweiwertige Alkanreste mit 3 bis 6 C-Atomen, die auch durch 1 oder 2 Sauerstoffatome unterbrochen sein können, zu 10 bis 30 Mol% zweiwertige Polyetherreste mit einem durchschnittlichen Molgewicht von 1 000 bis 3 000 und zu 0 bis 50 Mol% Ethylenreste bedeuten und

R für einen geradkettigen oder verzweigten Alkylrest oder Alkenylrest mit 6 bis 18 C-Atomen steht.

Die für G stehenden zweiwertigen Polyetherreste leiten sich ab z. B. von Polyalkylenglycolen mit 2 bis 4 C-Atomen in den Alkylen-Einheiten, wie z. B. Polyethylenglycol, Polypropylenglycol, Polybutylenglycol und/oder Polyethylenpolypropylenglycol. Bevorzugte zweiwertige Polyetherreste leiten sich ab von Polyethylenglykol.

Im Rahmen der vorliegenden Erfindung beziehen sich die Angaben in Mol%, soweit nicht ausdrücklich etwas anderes angegeben ist, auf die Gesamtmenge der Dicarbonsäurekomponente, die gleich 100 gesetzt wird.

Die erfindungsgemäßen Polyester weisen als Endgruppe überwiegend Diolreste auf, so daß ihnen die allgemeine Formel

$$HOGO—(—CO—A—CO—O—G—O)_n—H$$

zukommt, wobei G und A die oben genannten Bedeutungen haben und n einen solchen Wert annimmt, daß das durchschnittliche Molekulargewicht 1 000 bis 3 000 beträgt.

In bevorzugten erfindungsgemäßen Polyestern bedeutet G im statistischen Mittel zu 50 bis 70 Mol% geradlinige oder verzweigte zweiwertige Alkanreste mit 3 bis 6 C-Atomen, die auch durch 1 oder 2 Sauerstoffatome unterbrochen sein können, zu 10 bis 30 Mol% zweiwertige Polyetherreste mit einem durchschnittlichen Molgewicht von 1 000 bis 3 000 und zu 20 bis 40 Mol% Ethylenreste bedeuten.

Bevorzugt sind auch solche erfindungsgemäßen Polyester, in denen A im statistischen Mittel zu 4-10 Mol%, zweiwertige Reste der Formel II bedeutet, wegen ihrer besonders guten Waschresistenz ferner solche, in denen ein für G stehender zweiwertiger Rest eines Alkans mit 3 bis 6 C-Atomen geradkettig ist und auch solche, in denen ein für R stehender Alkyl- oder Alkenylrest verzweigt ist.

Bevorzugte erfindungsgemäße Polyester sind auch solche, in denen R ein Alkenylrest mit 6 bis 18 C-Atomen ist.

Besonders bevorzugt sind solche erfindungsgemäßen Polyester, die mehrere bevorzugte Merkmale aufweisen.

Das scheinbare mittlere Molekulargewicht der erfindungsgemäßen Polyester beträgt vorzugsweise 1 000-2 000, insbesondere 1 200-1 600. Die Polymischester mit Molekulargewichten bis ca. 1 600 sind leichter dispergierbar als solche mit höherem Molekulargewicht. Letztere können aber, gegebenenfalls mit Hilfe eines Dispergierhilfsmittels, ebenfalls in einwandfrei stabile, feinstdisperse Emulsionen bzw. Suspensionen übergeführt werden. Die Bestimmung des scheinbaren, mittleren Molekulargewichts erfolgt im Dampfdruckosmometer in Dimethylformamid als Lösungsmittel (vgl. Shouji Kume und Haruo Kobayashi: Molecular Weight Measurement by Vapor Pressure Osmometer, erschienen in « Die Makromolekulare Chemie » Bd. 79 (1964) S. 1-7). Wegen der Dissoziation der wenigen unveresterten Carboxylgruppen liegt das wirkliche Mittel des Molekulargewichts höher als der so gemessene, scheinbare Wert. Der Meßwert ist jedoch ein hinreichend genaues Kriterium zur Charakterisierung des Kondensationsgrades der erfindungsgemäßen Polymischester und zur Bestimmung des Endpunktes der Polykondensationsreaktion.

Die Herstellung der erfindungsgemäßen Polyester erfolgt in an sich bekannter Weise, indem man eine Mischung aus 80-97 Mol% Terephthalsäure oder eines geeigneten Terephthalsäurederivats und 3-20 Mol% einer Alkyl- oder Alkenylbernsteinsäure der Formel III

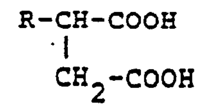

(III)

worin R die in Anspruch 1 angegebene Bedeutung hat, oder eines geeigneten Derivats mit einer Mischung aus 30-90 Mol%, vorzugsweise 50-70 Mol%, eines geradlinigen oder verzweigten Alkandiols mit 3 bis 6 C-Atomen, die auch durch 1 oder 2 Sauerstoffatome unterbrochen sein können, 10-30 Mol% eines Polyethylenglykols mit einem mittleren Molekulargewicht von 1 000 bis 3 000 und gegebenenfalls 0-50 Mol%, vorzugsweise 20-40 Mol%, Ethylenglycol in an sich bekannter Weise bei Temperaturen von 100-280 °C, vorzugsweise 150-230 °C, miteinander zur Reaktion bringt.

Weiterhin werden auch dann bevorzugte erfindungsgemäße Polyester erhalten, wenn 4-10 Mol% der Alkyl- oder Alkenylbernsteinsäure der Formel III zur Reaktion gebracht werden.

Insbesondere werden dann bevorzugte erfindungsgemäße Polyester erhalten, wenn als Bernsteinsäurederivat der Formel III Alkenylbernsteinsäuren eingesetzt werden, wie sie bei der bekannten Umsetzung von Olefinen mit 6-18 C-Atomen mit Maleinsäure bzw. Maleinsäureanhydrid im Molverhältnis von 1 : 1 oder bei der Umsetzung von Olefinen mit weniger als 6 C-Atomen mit Maleinsäure bzw. Maleinsäureanhydrid in einem bezüglich des Olefins höheren Molverhältnis erhalten werden. So werden beispielsweise ausgezeichnete erfindungsgemäße Polyester dann erhalten, wenn als Bernsteinsäurederivat der Formel III bzw. der weiter unten angegebenen Formel IV die 2,4-Dimethylheptenylbernsteinsäure bzw. deren Anhydrid, das in bekannter Weise durch Reaktion von 1 Mol Maleinsäure bzw. Maleinsäureanhydrid mit 3 Mol Propylen hergestellt werden kann, eingesetzt wird.

Im Sinne vorliegender Erfindung bedeutet « miteinander in Reaktion bringen », daß die Reaktanten tatsächlich in ein Polyestermolekül eingebaut werden und sich nicht etwa der Reaktion durch Verdampfen oder Sublimation entziehen. Wird ohne einen Überschuß der flüchtigen, oben genannten Diolkomponenten gearbeitet, so ist durch entsprechende Gestaltung der Apparatur in bekannter Weise dafür zu sorgen, daß ausschließlich das bei der Reaktion gebildete Wasser aus dem Reaktionsbereich entweichen kann, z. B. durch Aufsatz einer gut trennenden Kolonne.

Geeignete Derivate von Terephthalsäure im Sinne vorliegender Erfindung sind solche, die nach dem Stand der Technik zur Herstellung von Estern eingesetzt werden können, wie z. B. die Dialkylester mit 1 bis 4 C-Atomen pro Alkylrest. Das gleiche gilt für die Alkyl- und Alkenylbernsteinsäuren der Formel III ; zusätzlich sind bei diesen auch die Anhydride sehr geeignet.

Beispiele für geeignete Ester, Anhydride und Säurechloride sind : Dimethyl-, Diethyl-, Di-n-propyl-, Di-isopropyl-, Di-n-butyl- und Di-isobutylester der Terephthalsäure und der Alkyl- und Alkenylbernsteinsäure der Formel III, das Alkyl- und Alkenylbernsteinsäureanhydrid der Formel IV

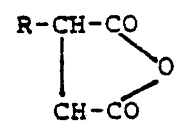

(IV)

worin R die obengenannte Bedeutung hat.

Beispiele für Reste R, die in der erfindungsgemäß einzukondensierenden Alkyl- und Alkenylbernsteinsäure oder deren geeignetem Derivat vorliegen können, sind : Hexyl-(1), -(2) oder -(3), Isohexyl, Heptyl, Isoheptyl, Octyl-(1), -(2), -(3) oder -(4), Isooctyl, 2-Ethylhexyl-(1), Nonyl, Isononyl, 2,4-Dimethylheptyl-(1), Decyl, Dodecyl, Lauryl, Palmityl, Stearyl, Hexenyl, Isohexenyl, Heptenyl, Methylheptenyl, 2,4-Dimethyl-heptenyl (« Tripropenyl »), Octenyl, Isooctenyl, 2-Ethyl-hexenyl, Nonenyl, Decenyl, Dodecenyl, Trimethyl-nonenyl, Oleyl, Octadecenyl.

Zur Verbesserung der Gleichgewichtslage nach dem Massenwirkungsgesetz sowie insbesondere zur Erhöhung der Reaktionsgeschwindigkeit, aber auch zur Verbesserung der Ansatzkonsistenz wird in der Praxis mit einem Diolüberschuß gearbeitet. So werden in der Regel in bis zu der dreifachen der vorhin angegebenen Mol-Menge, oder pro 100 Mol% Gesamtdicarbonsäuren 150-300 Mol%, vorzugsweise 150-250 Mol%, Gesamtdiole eingesetzt, wobei der Überschuß insbesondere bei den Alkandiolen mit 3-6 C-Atomen und beim Ethylenglycol angewendet wird, während die hochsiedenden Polyethylenglycole in der Regel nicht im Überschuß eingesetzt werden.

Beispiele für geeignete Alkandiole mit 3-6 C-Atomen sind : Propandiol-1,2 und Propandiol-1,3 ; Butandiole, wie Butandiol-1,2, -1,3 und insbesondere -1,4, 2-Methylpropandiol-1,3, Pentandiole, wie Pentandiol-1,5 ; Neopentylglycol, Hexandiole, insbesondere Hexandiol-1,6.

Die Reaktion zwischen den Dicarbonsäuren und den Diolen erfolgt unter Wasserabspaltung. Wird anstelle von freien Dicarbonsäuren deren Niederalkylester mit 1 bis 4 C-Atomen in den Alkylresten eingesetzt, so erfolgt bei der Reaktion Abspaltung der entsprechenden Niederalkanole. Bei Einsatz von Säureanhydriden der Alkyl- bzw. Alkenylbernsteinsäuren der Formel III erfolgt der Einbau der Dicarbonsäurereste II unter Ringöffnung. Die Umsetzung zwischen den Ausgangskomponenten wird im folgenden gemäß üblicher Sprachregelung als Kondensationsreaktion bezeichnet.

Die Herstellung des erfindungsgemäßen Polyesters durch Kondensation der Ausgangskomponenten wird, wie üblich, bei erhöhter Temperatur von 100 bis 280 °C, insbesondere 150 bis 230 °C, vorzugsweise unter einer Atmosphäre eines inerten Gases, wie z. B. Stickstoff oder Kohlendioxid, und/oder unter vermindertem Druck und zweckmäßigerweise unter Rühren durchgeführt, wobei die flüchtigen Kondensationsprodukte (Wasser und/oder Alkohole) sowie gegebenenfalls überschüssige Ausgangskomponenten, meistens ein Diol, abdestilliert werden. Bei Anwendung von Normaldruck kann es zweckmäßig sein, gegen Ende der Kondensation ein Vakuum von z. B. 10 bis 30 mbar und gegebenenfalls danach noch ein solches von ca. 1 bis 3 mbar oder gegebenenfalls noch darunter anzulegen, um die flüchtigen Produkte weitgehend zu entfernen. Die Kondensation dauert normalerweise 3 bis 20 Stunden und wird so weit geführt, bis das gewünschte scheinbare mittlere Molekulargewicht von 1 000 bis 3 000, vorzugsweise 1 000 bis 2 000, erreicht ist. Die für die Kondensation verwendeten Ausgangsmaterialien können alle zunächst gemischt und dann gemeinsam kondensiert werden. Bei diesem Vorgehen liegen im Produkt die Bausteine in statistischer Verteilung vor. Die erfindungsgemäßen Produkte können aber auch dadurch erhalten werden, daß zunächst nur ein Teil der Ausgangsmaterialien vorkondensiert wird und der Rest dann anschließend in beliebiger Reihenfolge und in beliebigem zeitlichen Abstand mit dem Vorkondensat weiterkondensiert wird. Abgesehen von stets möglichen Umesterungsvorgängen können auf diesem Wege bei gleichen Ausgangsmaterialien Produkte mit verschiedener Verteilung der Einzelbausteine hergestellt werden, die auch in ihren anwendungstechnischen Eigenschaften in gewissen Grenzen variieren können. Substratspezifisch optimierte anwendungstechnische Eigenschaften kann man besonders einfach durch eine verschieden weit geführte Kondensation, also durch Produkte mit verschieden hohem Molekulargewicht, erhalten.

Die Polykondensationsreaktion kann sowohl mit den üblichen Veresterungs- bzw. Umesterungskatalysatoren durchgeführt werden, wie auch ganz ohne solche Katalysatoren. Beides kann im Einzelfall seine besonderen Vorteile haben, da man je nachdem bei sonst gleicher Reaktionsführung die Eigenschaften der Produkte in gewissen Grenzen variieren kann. Beispielsweise können als Veresterungs- bzw. als Umesterungskatalysatoren Alkalihydroxide, wie Natrium- oder Kaliumhydroxid oder Alkalialkoholate, wie Natriummethylat oder -ethylat, Erdalkalioxide oder -hydroxide, wie z. B. die entsprechenden Calcium- oder Magnesiumverbindungen, sowie ferner auch Zink-, Cadmium- oder Antimonoxid, Salze von organischen Carbonsäuren, wie Natrium-, Calcium-, Mangan- oder Zinkacetat oder -formiat, organische Titanverbindungen, insbesondere die Titanalkoholate, wie z. B. Titanisopropylat oder Titanbutylat, u. a. verwendet werden. Die anzuwendenden Mengen sind vor allem von der Wirksamkeit des jeweiligen Katalysators abhängig. Die Katalysatormenge wird normalerweise so gering wie möglich gehalten. Wenig geeignet sind saure Katalysatoren, weil sie gegebenenfalls eingesetztes Glycol und Diethylenglycol in Dioxan verwandeln und damit weitgehend den Kettenbildungsreaktionen entziehen.

Die erfindungsgemäßen Polyester können in an sich bekannter Weise dispergiert werden, und zwar mit oder ohne Zusatz eines Dispergierhilfsmittels. Der besondere Charakter dieser Dispersionen liegt darin, daß sie, aus der heißen Schmelze hergestellt, zunächst Emulsionen sind, aber beim Erkalten zu Suspensionen erstarren. Wenn man die Dispersionen aus der erkalteten Schmelze herstellt, erhält man direkt Suspensionen. Vorzugsweise werden die Dispersionen der erfindungsgemäßen Polyester ohne Zuhilfenahme von Dispergierhilfsmitteln hergestellt. Hier kann man

a) entweder Wasser in die heiße Schmelze einrühren (wobei eine hochviskose Phase durchlaufen wird) oder

b) technisch einfacher, die heiße Schmelze in Wasser einrühren. Wenn dabei intensiv genug vermischt wird, z. B. mit einem Rührwerk vom Typ Ultra-Turrax (10 000 U/Min.) oder besser mit einem Ultraschallgerät (20 000 Hz), kann man direkt stabile, feinstdisperse Systeme mit einer Teilchengröße von ca. 1 µm erhalten. Zu beachten ist, daß diese Polyester wegen ihres hohen Gehalts an einkondensiertem Polyethylenglycol (meist über 50 Gew.% der gesamten Festsubstanz !) in wässriger Emulsion bei Temperaturen über 60 °C den bekannten Trübungspunkt zeigen und aufrahmen. Man muß die Dispersionen also entweder unter 50 °C herstellen, oder aber unter starker Durchmischung auf Temperaturen unter 50 °C abkühlen, ehe man sie lagern kann. Vorteilhaft für die Stabilität der Dispersionen kann es auch sein, die von Natur aus schwach sauren Dispersionen durch einen geringen Basenzusatz zu neutralisieren ;

c) den erstarrten Polyester in grobkörniger Form oder in Form von Brocken zunächst bei 10-50 °C, vorzugsweise bei 15-40 °C, insbesondere bei Raumtemperatur, einige Stunden mit Wasser verrühren, wobei er zu einem feinen Schlamm zerfällt. Dieser wird dann in ein geeignetes Gefäß umgefüllt, mit weiterem Wasser nachgespült und gleichzeitig auf die gewünschte Endkonzentration eingestellt. Dieser Feinschlamm wird dann entweder mit Glaskugeln, vorzugsweise solchen mit einem Durchmesser von ca. 0,5 cm, oder in einer geeigneten Sandmühle so lange gemahlen, bis mindestens 95 % der Teilchen einen Durchmesser von ca. 1 µm erreicht haben (Kontrolle unter dem Mikroskop). An so hergestellten Dispersionen beobachtet man auch bei 50 °C beim Lagern kein Gelieren oder Absetzen.

Auf dem Wege c) sind immer einwandfreie Dispersionen zu erhalten. Falls dies auf den Wegen a) und b) einmal nicht gelingen sollte, kann man diese Dispersionen in einfacher Weise ebenfalls nachträglich noch vermahlen, bis die erforderliche Feinverteilung erreicht ist. Die Wassermenge wird so gewählt, daß 5-33 1/3 gew.%ige, vorzugsweise 10-25 gew.%ige, Dispersionen erhalten werden.

Ist es in besonderen Fällen doch erwünscht, die Dispersionen unter Zusatz eines Dispergierhilfsmittels herzustellen, so kann man dieses vorteilhaft gleich am Ende der Polykondensation der Schmelze zumischen. Man kann es aber auch mit praktisch gleichem Endergebnis auch dem Wasser zusetzen oder zu irgendeinem anderen Zeitpunkt in die Dispersion einführen.

Als Dispergierhilfsmittel können die allgemein bekannten nichtionischen Produkte eingesetzt werden, die im wesentlichen auf Oxalkylierungsprodukten von OH-Gruppen enthaltenden organischen Verbindungen basieren. Als Beispiele solcher geeigneter Dispergiermittel seien genannt : oxethyliertes Benzyl-hydroxydiphenyl, vorzugsweise mit ca. 12 Ethylenoxideinheiten, oxethyliertes 2,4,6-Tris-tert. butylphenol oder 4-Nonylphenol, vorzugsweise mit ca. 6 Ethylenoxideinheiten.

Solche nichtionogene Emulgatoren werden vorzugsweise in einer Menge von bis 5 Gew.% eingesetzt werden.

Die erfindungsgemäßen Polyester und ihre Dispersionen dienen zur Behandlung von Textilmaterialien wie Fäden, Garnen oder textilen Flächengebilden, die ausschließlich oder teilweise aus hydrophoben synthetischen Fasern hergestellt wurden.

Hydrophobe Fasern im Sinne dieser Erfindung sind Fasern aus Polyestern, insbesondere Polyethylenterephthalat, Polyamiden und Polyacrylnitril sowie solche aus den entsprechenden chemisch modifizierten Polymeren.

Die Behandlung der genannten Textilmaterialien erfolgt in der Weise, daß man die erfindungsgemäßen Polyester, vorzugsweise in Form der beschriebenen Dispersionen, in an sich bekannter Weise auf die Textilmaterialien aufbringt und nach dem üblichen Trocknen durch eine Hitzebehandlung fixiert. Der Auftrag der Polyester bzw. deren Dispersionen erfolgt in an sich bekannter Weise, z. B. nach dem Ausziehverfahren, mittels einer Foulardapplikation oder durch Sprühen.

Die erfindungsgemäßen Polyester, vorzugsweise in Form der Dispersionen, werden dabei in einer Auflage von 0,3 bis 1,5 Gew.%, vorzugsweise 0,6 bis 1,2 Gew.%, bezogen auf das Substratgewicht, aufgebracht. Dementsprechend werden Dispersionen der erfindungsgemäßen Polyester, die einen Polyestergehalt von 5 bis 33 1/3 Gew.%, vorzugsweise 10 bis 25 Gew.%, aufweisen, in einer Menge von 0,9 bis 30 Gew.%, vorzugsweise 2,4 bis 12 Gew.%, bezogen auf das Substratgewicht, auf die Textilmaterialien appliziert.

Die mit den erfindungsgemäßen Polymischestern behandelten Fäden, Garne oder textilen Flächengebilde, vornehmlich hergestellt aus PES, PA, PAC und deren Mischungen mit cellulosischen Fasern, zeigen eine erheblich reduzierte Neigung zu statischer Aufladung und ein wesentlich verbessertes Wasseraufnahmevermögen (Saugfähigkeit). Gleichzeitig wird durch die erfindungsgemäße Behandlung die Tendenz zur Naßanschmutzung, aber auch die der Trockenanschmutzung, erheblich herabgesetzt. Mechanisch aufgetragener Schmutz, wie Öle und Fette, kann von Materialien, die mit den erfindungsgemäßen Polymischestern behandelt wurden, wesentlich leichter entfernt werden (Soil-Release-Effekt). Die erhaltenen Effekte sind in hohem Maße wasch- und reinigungsbeständig, und zwar um so mehr, je mehr und je längere Alkylreste in den Diolkomponenten und Alkyl- bzw. Alkenylreste in Bernsteinsäure-Komponenten vorhanden sind und je höher das Molgewicht des Polyesters ist. Der Griff der behandelten Textilien wird nicht negativ beeinflußt.

Die folgenden Ausführungsbeispiele veranschaulichen die Herstellung der erfindungsgemäßen Polyester und deren Dispersionen sowie ihre Anwendung.

## Beispiel 1

(94 Mol% DMT ; 6 Mol% 2,4-Dimethyl-heptenyl-bernsteinsäureanhydrid (« Tripropylenbernsteinsäureanhydrid ») ; 90 Mol% Monoethylenglykol ; 110 Mol% Butandiol-1,4 ; 27,3 Mol% PEG 1 500.)

In einem trockenen 4-Liter-Schliff-Vierhalskolben mit Rührer, Gaseinleitungsrohr, Thermometer und aufsteigendem Luftkühler mit oben angesetztem Liebig-Kühler werden

| | |
|---|---|
| 547,1 g | Terephthalsäure-dimethylester (DMT) (2,82 Mol) |
| 40,8 g | Tripropylenbernsteinsäureanhydrid (0,18 Mol) |
| 167,4 g | Monoethylenglykol (2,7 Mol) |
| 297,0 g | Butandiol-1,4 (3,3 Mol) |
| 1 228,5 g | Polyethylenglykol 1 500 (PEG 1 500) (0,819 Mol) |
| 1,5 g | Titantetraisopropylat |

vorgelegt.

Die Apparatur wird evakuiert und mit Stickstoff aufgefüllt. Dann wird unter Überleiten eines schwachen Stickstoff-Stromes der Kolbeninhalt im Laufe einer Stunde auf 170 °C geheizt. Bei ca. 130 °C ist der Inhalt völlig durchgeschmolzen. Schon ab 100 °C tritt eine leichte Sublimation von DMT auf. Bis zu deren endgültiger Ablösung durch rückfließendes Methanol wird der Stickstoffstrom weitgehend gedrosselt. Es wird wie folgt weitergeheizt :

eine Stunde bei 170 °C

| | |
|---|---|
| im Laufe einer Stunde auf | 180 °C |
| im Laufe 1/2. Stunde auf | 190 °C |
| im Laufe 1/2 Stunde auf | 200 °C |
| im Laufe 1/2 Stunde auf | 208 °C |
| eine Stunde bei | 208 °C (205-210 °C). |

Dann wird Wasserstrahlvakuum angelegt und nach Erreichen von ca. 20 mbar noch 10 Minuten bei 208 °C (205-210 °C) weitergeheizt. Die gesamte Vakuumphase dauert etwa 30 Minuten. Dabei wird ein scheinbares mittleres Molekulargewicht von 1 350-1 400 erreicht. Man erhält insgesamt ca. 373 g Destillat, bestehend aus Methanol, Wasser, Dioxan, überschüssigem Glykol und überschüssigem Butandiol-1,4. Im Kolben verbleiben 1 910 g dünnflüssige, helle Schmelze, die man gleich heiß langsam in 5 730 g destilliertes Wasser von 20 °C unter kräftigem Rühren einlaufen läßt. Die Temperatur steigt dabei bis ca. 47 °C an, und man erhält eine bereits recht feine Dispersion, deren Teilchen aber überwiegend noch einen Durchmesser von 10-100 µm haben. Diese Dispersion wird dann auf 70 °C angeheizt und 3 Stunden bei dieser Temperatur kräftig gerührt. Anschließend läßt man unter Rühren auf Raumtemperatur erkalten. Man erhält so 7 655 g einer hervorragend homogenen, leicht viskosen, 25 %igen Dispersion, deren Teilchen zu ca. 95 % einen mittleren Durchmesser von 1 µm haben. Die Dispersion ist einwandfrei lagerbeständig und glatt mit Wasser verdünnbar. Sie neigt auch bei 50 °C nicht zum Aufrahmen oder Absetzen.

Der Schmelzpunkt des undispergierten Polyesters liegt bei 115-135 °C.

Durch Kürzen oder Verlängern der Heizzeit lassen sich leicht Variationen dieses Polyesters mit niedrigerem oder höherem Molekulargewicht erhalten. Dadurch kann das Hydrophilierungsmittel speziellen Wünschen angepaßt werden.

## Beispiel 2

(94 Mol% DMT ; 6 Mol% 2,4-Dimethyl-heptenyl-bernsteinsäureanhydrid ; 80 Mol% MEG ; 120 Mol% Propandiol-1,3 ; 10 Mol% PEG 2 000)

a) Herstellung des Polyesters :

In einem 2-Liter-Schliff-Vierhalskolben mit analogen Aufbauten, wie im Beispiel 1 beschrieben, werden 273,5 g DMT (1,41 Mol), 20,3 g 2,4-Dimethyl-heptenylbernsteinsäureanhydrid (0,09 Mol), 74,4 g Monoethylenglykol (1,2 Mol), 136,8 g Propandiol-1 (1,8 Mol), 300 g PEG 2 000 (0,15 Mol) und 1 g Titantetraisopropylat als Katalysator bei 130 °C geschmolzen, unter Stickstoff im Laufe einer Stunde auf 170 °C geheizt und dann weiter gleichmäßig im Laufe von drei Stunden die Reaktionstemperatur auf 208 °C erhöht. Das hierbei erhaltene Destillat besteht überwiegend aus Methanol und Wasser. Man rührt noch eine Stunde bei 208 °C und legt dann vorsichtig das Vakuum einer Wasserstrahlpumpe an (Gefahr des Aufschäumens). Sobald nach ca. 15 Minuten 20 mbar erreicht sind, kondensiert man noch 1/2 Stunde bei 13-20 mbar. Neben weiterem Methanol sowie Dioxan destilliert hier auch der Überschuß an Glykol ab. Man erhält 632 g einer hellen Schmelze als Ausbeute, die auf VA-Bleche ausgegossen werden kann und die dort beim Erkalten zu einem weißen Wachs erstarrt. Der Schmelzpunkt des so erhaltenen Polyesters beträgt 175-185 °C, Molekulargewicht = 2 000. Das Wachs wird in Stücke zerbrochen und so abgefüllt.

Zu einem Polyester mit sehr ähnlichen Eigenschaften gelangt man, wenn man das oben eingesetzte 2,4-Dimethyl-heptenyl-bernsteinsäureanhydrid durch die gleiche Menge 2,4-Dimethyl-heptyl-bernsteinsäureanhydrid ersetzt.

b) Herstellung der Dispersion :

100 g des unter a) hergestellten Polyesters in Form der groben Brocken werden im Literkolben über Nacht kräftig mit 400 ml Wasser verrührt und zerfallen dabei zu einem feinen Schlamm. Dieser wird in eine 1-Liter-Schraubverschlußflasche umgefüllt. Es werden 10 g eines Emulgators auf der Basis von oxethyliertem Benzyl-hydroxydiphenyl zugesetzt, und der Kolben wird mit 190 ml Wasser nachgespült (= 14,3 %ige Einstellung). Dann wird die Flasches mit Glaskugeln von 0,5 cm Durchmesser fast völlig aufgefüllt (ca. 600 ml), verschraubt und 2 Tage auf der Walzenmühle gekugelt. Man erhält eine sehr feinteilige Dispersion mit Teilchen, die zu über 95 % nur 1 µm Durchmesser haben (Kontrolle unter Mikroskop). Die Trennung von den Kugeln erreicht man in einfacher Weise durch Abgießen über eine entsprechend große Nutsche. Die so erhaltene Dispersion neigt auch beim Lagern bei 50 °C nicht zum Gelieren oder Absetzen.

## Beispiel 3

(96 Mol% DMT ; 4 Mol% Octadecenyl-bernsteinsäureanhydrid ; 115 Mol% Monoethylenglykol ; 135 Mol% Butandiol-1,4 ; 10 Mol% PEG 3 000 ; 5 Gew.% Emulgator)

a) Herstellung eines emulgatorhaltigen erfindungsgemäßen Polyesters :

In einem 2-Liter-Schliff-Vierhalskolben mit analogen Aufbauten, wie im Beispiel 1 beschrieben, werden 279,4 g DMT (1,44 Mol), 21,1 g Octadecenyl-bernsteinsäureanhydrid (0,06 Mol), 74,4 g Monoethylenglykol (1,2 Mol),

182,5 g Butandiol-1,4 (2,025 Mol), 450 g PEG 3 000 (0,15 Mol) und 1 g Titantetrabutylat bei 130 °C geschmolzen, unter Rühren im Stickstoffstrom im Laufe von einer Stunde auf 170 °C geheizt und dann weiter gleichmäßig im Laufe von 3 Stunden die Reaktions-temperatur auf 208 °C erhöht. Das Destillat besteht überwiegend aus Methanol und Wasser. Man rührt noch eine Stunde bei 208 °C und legt dann vorsichtig das Vakuum einer Wasserstrahlpumpe an (Gefahr des Aufschäumens). Sobald nach ca. 15 Minuten 20 mbar erreicht sind, kondensiert man noch 1/2 Stunde bei 13-20 mbar. Neben weiteren Methanol sowie Dioxan destilliert jetzt auch der Überschuß an Glykol ab. Man erhält 808 g einer hellen Schmelze, der man 40,4 g eines Emulgators auf Basis von oxethyliertem Benzylhydroxydiphenyl zumischt (= 5 Gew.%), und die dann sogleich auf ein VA-Blech ausgegossen wird. Die Mischung kristallisiert beim Erkalten, und man erhält 848,4 g weißes Wachs vom Schmelzpunkt ca. 160-180 °C. Das scheinbare mittlere Molekulargewicht des Polyesters vor der Emulgatorzumischung beträgt 2 000.

b) Herstellung der Dispersion :

105 g obigen Wachses in Form grober Brocken werden im Literkolben über Nacht kräftig mit 395 ml Wasser verrührt und zerfallen dabei zu einem feinen Schlamm. Diesel wird in eine 1-Liter-Schraubverschlußflasche umgefüllt und mit 200 ml Wasser nachgespült (= 14,3 %-ige Einstellung). Dann wird die Flasche mit Glaskugeln von 0,5 cm Durchmesser fast völlig aufgefüllt (ca. 600 ml), verschraubt und zwei Tage auf der Walzenmühle gekugelt. Man erhält eine sehr feinteilige Dispersion mit Teilchen, die zu über 95 % nur 1 µm Durchmesser haben (Kontrolle unter Mikroskop). Die Trennung von den Kugeln erreicht man in einfacher Weise durch Abgießen über eine entsprechend große Nutsche. Die so erhaltene Dispersion neigt auch beim Lagern 50 °C nicht zum Gelieren oder Absetzen.

## Beispiel 4

(95 Mol% DMT ; 5 Mol% n-Dodecenyl-bernsteinsäureanhydrid ; 90 Mol% MEG ; 60 Mol% Butandiol-1,4 ; 60 Mol% Neopentylglykol ; 27,3 Mol% PEG 1 500)

In einem 2-Liter-Schliff-Vierhalskolben mit analogen Aufbauten, wie im Beispiel 1 beschrieben, werden 276,5 g Terephthalsäuredimethylester (1,425 Mol), 20,1 g n-Dodecenyl-bernsteinsäureanhydrid (0,075 Mol), 83,7 g Monoethylenglykol (1,35 Mol), 81 g Butandiol-1,4 (0,9 Mol), 93,6 g Neopentylglykol (0,9 Mol) und 614,3 g PEG 1 500 (0,409 5 Mol) mit 1 g Titantetraisobutylat als Umesterungskatalysator bei 130 °C geschmolzen, unter Rühren im Stickstoffstrom im Laufe einer Stunde auf 170 °C geheizt und dann weiter gleichmäßig im Laufe von 3 Stunden die Reaktionstemperatur auf 208 °C erhöht. Das Destillat besteht überwiegend aus Methanol und Wasser. Man rührt noch eine Stunde bei 208 °C und legt dann vorsichtig das Vakuum einer Wasserstrahlpumpe an (Gefahr des Aufschäumens). Sobald nach ca. 15 Minuten 20 mbar erreicht sind, kondensiert man noch 1/2 Stunde bei 13 bis 20 mbar. Neben weiterem Methanol sowie Dioxan destilliert hier auch der Überschuß an Glykol ab. Man erhält 962 g einer hellen Schmelze, die noch heiß auf VA-Bleche gegossen wird. Sie erstarrt dort im Laufe einiger Stunden zu einem festen weißen Wachs, das man in kleinere Stücke zerbricht und zum Lagern in eine Flasche abfüllt. Das scheinbare, mittlere Molekulargewicht beträgt 1 200.

Zu einem Polyester mit sehr ähnlichen Eigenschaften gelangt man, wenn man das oben eingesetzte Dodecenyl-bernsteinsäureanhydrid durch die gleiche Menge Dodecylbernsteinsäureanhydrid ersetzt.

## Beispiel 5

(94 Mol% DMT ; 6 Mol% Isononyl-bernsteinsäureanhydrid ; 200 Mol% Propandiol-1,3 ; 27,3 Mol% PEG 1 500)

a) Herstellung des Polyesters :

In einem 1-Liter-Schliff-Vierhalskolben mit analogen Aufbauten, wie im Beispiel 1 beschrieben, werden 273,5 g Terephthalsäuredimethylester (1,41 Mol), 20,34 g Isononyl-bernsteinsäureanhydrid (0,09 Mol), 614,3 g PEG 1 500 (0,4095 Mol) und 1 g Titantetraisopropylat im Laufe einer Stunde auf 170 °C, einer weiteren Stunde auf 190 °C und einer dritten Stunde auf 210 °C geheizt, um zunächst das PEG 1 500 optimal einzukondensieren. Man läßt dann auf 150 °C abkühlen, setzt 228,3 g Propandiol-1,3 zu. Dann wird im Laufe einer Stunde auf 170 °C geheizt und stets unter gutem Rühren und im Stickstoffstrom im Laufe von 3 Stunden die Kondensationstemperatur gleichmäßig auf 208 °C erhöht.

Das hierbei erhaltene Destillat besteht überwiegend aus Methanol und Wasser. Man rührt noch eine Stunde bei 208 °C und legt dann vorsichtig das Vakuum einer Wasserstrahlpumpe an (Gefahr des

Aufschäumens). Sobald nach ca. 15 Minuten 20 mbar erreicht sind, kondensiert man noch 1/2 Stunde bei 13-20 mbar. Neben weiterem Methanol und etwas Wasser destilliert hier auch der Überschuß an Propandiol ab. Man erhält 954 g einer hellen Schmelze, die man zweckmäßigerweise auf ein VA-Blech ausgießlt und dort zu einem weißen Wachs erkalten läßt, wonach es sich bequem in kleine Stücke zerbrechen läßt. Molekulargewicht = 1 090.

Zu einem Polyester mit ganz ähnlichen Eigenschaften gelangt man, wenn man das oben eingesetzte Isononyl-bernsteinsäureanhydrid durch die gleiche Menge Isononenylbernsteinsäureanhydrid ersetzt.

b) Herstellung der Dispersion :

30 g des unter a) erhaltenen Schmelzkuchens wurden erneut aufgeschmolzen, auf 210 °C erhitzt und dann langsam unter kräftigem Rühren in 180 ml destilliertes Wasser von Raumtemperatur gegossen. Die weiße milchähnliche Flüssigkeit wurde 5 Minuten nachgerührt : mittlere Teilchengröße jetzt 10-100 μm. Anschließend wurde 10 Minuten bei 40-50 °C in einem Ultraschallgerät vom Typ « Branson Sonifier B 12 » (= 20 000 Hertz) mit 100 Watt Leistung beschallt. Man erhält eine typgerechte weiße Dispersion mit einer durchschnittlichen Teilchengröße von 1 μm.

Beispiel 6

(94 Mol% DMT ; 6 Mol% 2,4-Dimethyl-heptenyl-bernsteinsäureanhydrid ; 90 Mol% MEG ; 10 Mol% DEG ; 95 Mol% Butandiol-1,4 ; 27,3 Mol% PEG 1 500)

In einem trockenen 4-Liter-Schliff-Vierhalskolben mit Rührer, Gaseinleitungsrohr, Thermometer und aufsteigendem Luftkühler mit oben angesetztem Liebig-Kühler werden 547,1 g Terephthalsäure-dimethylester (DMT) (2,82 Mol), 40,8 g Tripropylenbernsteinsäureanhydrid (0,18 Mol), 167,4 g Monoethylenglykol (2,7 Mol), 31,8 g Diethylenglykol (0,3 Mol), 256,5 g Butandiol-1,4 (3,3 Mol), 1 228,5 g Polyethylenglykol 1 500 (PEG 1 500) (0,819 Mol), 1,5 g Titantetraisopropylat vorgelegt.

Die Apparatur wird evakuiert und mit Stickstoff aufgefüllt. Dann wird unter Überleiten eines schwachen Stickstoff-Stromes der Kolbeninhalt im Laufe einer Stunde auf 170 °C geheizt. Bei ca. 130 °C ist der Inhalt völlig durchgeschmolzen. Schon ab 100 °C tritt eine leichte Sublimation von DMT auf. Bis zu deren endgültiger Ablösung durch rückfließendes Methanol wird der Stickstoffstrom weitgehend gedrosselt. Es wird wie folgt weitergeheizt :

| | |
|---|---|
| eine Stunde bei | 170 °C |
| im Laufe einer Stunde auf | 180 °C |
| im Laufe 1/2 Stunde auf | 190 °C |
| im Laufe 1/2 Stunde auf | 200 °C |
| im Laufe 1/2 Stunde auf | 208 °C |
| eine Stunde bei | 208 °C (205-210 °C). |

Dann wird Wasserstrahlvakuum angelegt und nach Erreichen von ca. 15 mbar, was nach ca. 10 Minuten der Fall ist, noch 20 Minuten bei 208 °C (205-210 °C) weitergeheizt. Die gesamte Vakuumphase dauert etwa 30 Minuten. Dabei wird ein scheinbares mittleres Molekulargewicht von 1 350-1 400 erreicht. Man erhält insgesamt ca. 348 g Destillat, bestehend aus Methanol, Wasser, Dioxan, überschüssigem Glykol und überschüssigem Butandiol-1,4. Im Kolben verbleiben 1 925 g dünnflüssige, helle Schmelze, die man gleich heiß langsam in 5 775 g destilliertes Wasser, (= 3-fache Menge), von 20 °C unter kräftigem Rühren einlaufen läßt. Die Temperatur steigt dabei bis ca. 47 °C an, und man erhält eine bereits recht feine Dispersion, deren Teilchen überwiegend einen Durchmesser von 1-10 μm haben. Diese Dispersion wird nun auf 70 °C erhitzt und 2 Stunden bei dieser Temperatur kräftig gerührt. Anschließend läßt man unter Rühren bis auf Raumtemperatur erkalten. Man erhält 7 700 g einer hervorragend homogenen 25 %igen Dispersion, deren Teilchen zu ca. 90 % praktisch kolloidal gelöst sind. Sie sind unter dem Mikroskop nicht mehr zu erkennen. Die restlichen Teilchen haben einen mittleren Durchmesser von ca. 1 μm. Spezifisches Gewicht = 1,041.

Durch Kürzen oder Verlängern der Heizzeit lassen sich leicht Variationen dieses Polyesters mit niedrigerem oder höherem Molekulargewicht erhalten. Dadurch kann das Hydrophilierungsmittel speziellen Wünschen angepaßt werden.

Beispiel 7

a) Die nach Beispiel 1 hergestellte 14,3 gew.%ige Emulsion wird durch Verdünnen mit enthärtetem Wasser auf einen Feststoffgehalt von 2 Gew.% gebracht und wie folgt auf ein Gewebe aus texturiertem Polyester aufgebracht :

Das Gewebe wird durch die 2 gew.%ige Emulsion geleitet und auf eine Flottenaufnahme von ca. 60 % abgequetscht, wobei eine Wiederholung dieses Prozesses den Effekt erhöht. Das Gewebe wird dann auf

einem Trockenaggregat bei Temperaturen bis 120 °C getrocknet und anschließend auf einem separaten oder dem gleichen Aggregat 60 Sekunden bei 150 °C fixiert.

b) Unter den gleichen Bedingungen und auf dem gleichen Gewebe wurde ein handelsübliches Produkt des Wettbewerbs appliziert.
Die Prüfergebnisse sind in Tabelle I zusammengefaßt.

Beispiel 8

Die nach den Beispielen 1 bis 5 hergestellte 14,3 gew.-%ige Emulsion findet im Ausziehverfahren wie folgt Anwendung :

Fertiggestellte Färbungen von Fäden, Fasergarnen, textilen Flächengebilden aus Polyester, Polyamid oder Polyacrylnitril werden im letzten Spülbad mit 5 % (bezogen auf das Warengewicht) der erfindungsgemäßen 14,3 gew.-%igen Emulsion 20 Minuten bei 40 °C (pH 4-5) behandelt. Nach einer üblichen Wasserextraktion wird, wie im Beispiel 7 beschrieben, getrocknet und fixiert.
Die Applikation kann auch mit dem Färbeprozess kombiniert werden. In diesem Fall werden 5 % der erfindungsgemäßen 14,3 %igen Emulsion dem Färbebad zugegeben, und es wird wie unter den üblichen Bedingungen bei Koch- (95-98 °C) bzw. Hochtemperatur (ca. 135 °C) gearbeitet und fertiggestellt.

Beispiel 9

Die nach den Beispielen 1-5 hergestellten 14,3 gew.%igen Emulsionen werden mit enthärtetem Wasser auf einen Festsubstanzgehalt von 7 % verdünnt und auf das nachzubehandelnde Textilmaterial aus hydrophoben Fasern aufgesprüht. Die Trocknung und die Fixierung erfolgen wie im Beispiel 7 beschrieben.
In den folgenden Tabellen bedeuten die Spaltennummern :
1 : Saughöhe nach DIN 53 924 in cm
2 : Tropfentest
3 : Naßanschmutzung DIN 54 002
4 : Soil-Release AATCC 130
5 : Antistatik (Tesa-0-meter)
I : unbehandelt
II : behandelt mit erfindungsgemäßen Polyester

Tabelle I : Ergebnisse aus Beispiel 7

| | Anfangseffekt | | | nach 3 x MFW | | |
|---|---|---|---|---|---|---|
| | 1 | 2 | 5 | 1 | 2 | 5 |
| a) erfindungsgemäßes Produkt | 7cm | 4s | $3x10^4$ | 6,8cm | 10s | $4x10^5$ |
| b) Wettbewerbsprodukt | 4cm | 8s | $4x10^5$ | 4,3cm | 40s | $5x10^5$ |

Bei der Durchführung der oben beschriebenen Tests auf verschiedenen Fasermaterialien werden die in der folgenden Tabelle II angegebenen Werte erhalten.
MFW = Maschinenfeinwäsche

(Siehe Tabelle II Seite 11 f.)

Tabelle II

Ergebnisse auf verschiedenen Materialien.

| | Anfangsoffekt | | | | | | | | | |
|---|---|---|---|---|---|---|---|---|---|---|
| | 1 | | 2 | | 3 | | 4 | | 5 | |
| | I | II | I | II | I | II | I | II | I | II |
| PES-Taft | 1,2 | 2,7 | 6 s | 200 | 1 | 4 | 1 | 4-5 | $8x10^6$ | $5x10^3$ |
| PA-Taft | 1,1 | 3,9 | 10 s | 0 s | 1 | 3-4 | 2 | 3-4 | | $5x10^4$ |
| PAC Fasergewebe | 3,2 | 5 | 12 s | 0 s | 1 | 3 | 1 | 3-4 | $2x10^5$ | $10^3$ |

| | nach 3 x MFW | | | | | | | | | |
|---|---|---|---|---|---|---|---|---|---|---|
| | 1 | | 2 | | 3 | | 4 | | 5 | |
| | I | II | I | II | I | II | I | II | I | II |
| PES-Taft | 1,5 | 2,8 | 10 s | 60 s | 1 | 3-4 | 1 | 4 | $9x10^9$ | $8x10^8$ |
| PA-Taft | 1,3 | 3,8 | 10 s | 0 s | 1 | 3-4 | 2 | 4 | | $10^8$ |
| PAC Fasergewebe | 3,5 | 6,3 | 5 s | 0 s | 1 | 3-4 | 2 | 4 | | $10^9$ |

**Patentansprüche**

1. In Wasser dispergierbarer Polyester, der aus Baugruppen der Formel I

$$—CO—A—CO—O—G—O— \qquad (I)$$

aufgebaut ist, wobei

A im statistischen Mittel zu 80 bis 97 Mol% p-Phenylen und zu 3 bis 20 Mol% zweiwertige Reste der Formel II

$$\begin{array}{l} \;\;R \\ \;\;| \\ -CH-CH_2- \end{array} \qquad (II)$$

und

G im statistichen Mittel zu

30 bis 90 Mol% geradlinige oder verzweigte zweiwertige Alkanreste mit 3 bis 6 C-Atomen, die auch durch 1 oder 2 Sauerstoffatome unterbrochen sein können, zu 10 bis 30 Mol% zweiwertige Polyetherreste mit einem durchschnittlichen Molgewicht von 1 000 bis 3 000 und zu 0 bis 50 Mol% Ethylenreste bedeuten und

R für einen geradkettigen oder verzweigten Alkylrest oder Alkenylrest mit 6 bis 18 C-Atomen steht.

2. In Wasser dispergierbarer Polyester gemäß Anspruch 1 dadurch gekennzeichnet, daß G im statistischen Mittel zu 50 bis 70 Mol% geradlinige oder verzweigte zweiwertige Alkanreste mit 3 bis 6 C-Atomen, die auch durch 1 oder 2 Sauerstoffatome unterbrochen sein können, zu 10 bis 30 Mol% zweiwertige Polyetherreste mit einem durchschnittlichen Molgewicht von 1 000 bis 3 000 und zu 20 bis 40 Mol% Ethylenreste bedeuten.

3. In Wasser dispergierbarer Polyester gemäß den Ansprüchen 1 und 2, dadurch gekennzeichnet, daß A im statistischen Mittel zu 4 bis 10 Mol% zweiwertige Reste der Formel II bedeutet.

4. In Wasser dispergierbarer Polyester gemäß den Ansprüchen 1 bis 3, dadurch gekennzeichnet, daß ein für G stehender zweiwertiger Rest eines Alkans mit 3 bis 6 C-Atomen geradkettig ist.

5. In Wasser dispergierbarer Polyester gemäß den Ansprüchen 1 bis 4, dadurch gekennzeichnet, daß ein für R stehender Alkyl- oder Alkenylrest verzweigt ist.

6. In Wasser dispergierbarer Polyester gemäß den Ansprüchen 1 bis 5, dadurch gekennzeichnet, daß R ein Alkenylrest mit 6 bis 18 C-Atomen ist.

7. Verfahren zur Herstellung des in Wasser dispergierbaren Polyesters des Anspruchs 1, dadurch gekennzeichnet, daß man eine Mischung aus 80-97 Mol% Terephthalsäure oder eines geeigneten Terephthalsäurederivats und 3 bis 20 Mol% einer Alkylbernsteinsäure der Formel III

$$\begin{array}{l} R-CH-COOH \\ \quad\;\; | \\ \quad\; CH_2-COOH \end{array} \qquad (III)$$

worin R die im Anspruch 1 angegebene Bedeutung hat, oder eines geeigneten Derivats mit einer Mischung aus 30 bis 90 Mol% eines geradlinigen oder verzweigten Alkandiols mit 3 bis 6 C-Atomen, 10 bis 30 Mol% eines Polyethylenglykols mit einem mittleren Molekulargewicht von 1 000 bis 3 000 und gegebenenfalls 0 bis 50 Mol% Ethylenglycol in an sich bekannter Weise bei Temperaturen von 100 bis 280 °C zur Reaktion bringt.

8. Verfahren nach Anspruch 7, dadurch gekennzeichnet, daß man das Alkandiol mit 3 bis 6-Atomen und das Ethylenglycol in bis zu der dreifachen der im Anspruch 7 angegebenen Mol-Menge einsetzt.

9. Wäßrige Polyester-Dispersion bestehend aus 5-33 1/3 Gew.% eines dispergierbaren Polyesters der im Anspruch 1 angegebenen Zusammensetzung und 95 bis 66 2/3 Gew.% Wasser.

10. Wäßrige Polyester-Dispersion gemäß Anspruch 9, dadurch gekennzeichnet, daß sie zusätzlich 0 bis 5 Gew.% eines nichtionogenen Emulgators enthält.

11. Verwendung eines dispergierbaren Polyesters des Anspruchs 1 oder einer wäßrigen Dispersion desselben gemäß Anspruch 9 zur Hydrophilierung, zur Antistatikausrüstung und zur Soil-Release-Ausrüstung von Fasermaterialien, die vollständig oder zu einem erheblichen Anteil aus hydrophoben Fasern bestehen.

**Claims**

1. A water-dispersible polyester which is composed of building groups of the formula

—CO—A—CO—O—G—O (I)

where

A denotes, on statistical average, to 80 to 97 mol% of p-phenylene and to 3 to 20 mol% divalent radicals of the formula II

$$\begin{array}{c} R \\ | \\ -CH-CH_2- \end{array} \quad (II)$$

and

G denotes, on statistical average, to 30 to 90 mol% of linear or branched divalent alkane radicals having 3 to 6 C atoms which may be interrupted by 1 or 2 oxygen atoms, to 10 to 30 mol% divalent polyether radicals having an average molecular weight of 1,000 to 3,000, and to 0 to 50 mol% of ethylene radicals, and

R represents a straight-chain or branched alkyl radical or alkenyl radical having 6 to 18 C atoms.

2. A water-dispersible polyester according to Claim 1, characterised in that G denotes, on statistical average, to 50 to 70 mol% of linear or branched divalent alkane radicals having 3 to 6 C atoms which may be interrupted by 1 or 2 oxygen atoms, to 10 to 30 mol% of divalent polyether radicals having an average molecular weight of 1,000 to 3,000, and to 20 to 40 mol% of ethylene radicals.

3. A water-dispersible polyester according to Claims 1 and 2, characterised in that A denotes, on statistical average, to 4 to 10 mol% divalent radicals of the formula II.

4. A water-dispersible polyester according to Claims 1 to 3, characterized in that G represents a straight-chain divalent radical of an alkane having 3 to 6 C atoms.

5. A water-dispersible polyester according to Claims 1 to 4, characterized in that R represents a branched alkyl or alkenyl radical.

6. A water-dispersible polyester according to Claims 1 to 5, characterised in that R is an alkenyl having 6 to 18 C atoms.

7. A process for preparing the water-dispersible polyester of Claim 1, characterised in that a mixture of 80 to 97 mol% of terephthalic acid or of a suitable terephthalic acid derivate, and 3 to 20 mol% of an alkylsuccinic acid of the formula III

$$\begin{array}{l} R-CH-COOH \\ \quad\ | \\ \quad CH_2-COOH \end{array} \quad (III)$$

wherein R has the meaning given in Claim 1, or of a suitable derivative are reacted with a mixture of 30 to 90 mol% of a linear or branched alkane diol having 3 to 6 C atoms, 10 to 30 mol% of a polyethylene glycol having a mean molecular weight of 1,000 to 3,000 and, if appropriate, 0 to 50 mol% of ethylene glycol in a manner known per se at temperatures of 100 to 280 °C.

8. A process according to Claim 7, characterised in that the alkane diol having 3 to 6 C atoms and the ethylene glycol are used in up to three times the molar amount specified in Claim 7.

9. An aqueous polyester dispersion comprising 5 to 33 1/3 % by weight of a dispersible polyester of the composition given in Claim 1 and 95 to 66 2/3 % by weight of water.

10. An aqueous polyester dispersion according to Claim 9, characterised in that it also contains 0 to 5 % by weight of a nonionic emulsifier.

11. The use of a dispersible polyester of Claim 1 or of an aqueous dispersion thereof according to Claim 9, for hydrophiling, for the antistatic finishing and for the soil release finishing of fibre materials which wholly or to a considerable extent consist of hydrophobic fibres.

**Revendications**

1. Polyester pouvant se disperser dans l'eau, formé de groupes de formule I ci-dessous :

—CO—A—CO—O—G—O— (I)

dans laquelle

A représente, en moyenne statistique, pour 80 à 97 moles% le groupe p-phénylène et pour 3 à 20 moles% des radicaux divalents de formule II :

$$\begin{array}{c} R \\ | \\ -CH-CH_2- \end{array} \quad (II)$$

et

G, en moyenne statistique, pour 30 à 90 moles% des radicaux d'alcanes divalents linéaires ou ramifiés en $C_3$ à $C_6$ pouvant être interrompus par 1 ou 2 atomes d'oxygène, pour 10 à 30 moles% des radicaux de polyéthers divalents ayant une masse moléculaire moyenne de 1 000 à 3 000 et pour 0 à 50 moles% des radicaux d'éthylène,

R désignant un radical alkyle ou un alcényle linéaire ou ramifié en $C_6$ à $C_{18}$.

2. Polyester selon la revendication 1 caractérisé en ce que G représente en moyenne statistique pour 50 à 70 moles% des radicaux d'alcanes divalents linéaires ou ramifiés en $C_3$ à $C_6$ pouvant être interrompus par 1 ou 2 atomes d'oxygène, pour 10 à 30 moles% des radicaux de polyéthers divalents ayant une masse moléculaire moyenne de 1 000 à 3 000 et pour 20 à 40 moles% des radicaux d'éthylène.

3. Polyester selon la revendication 1 ou 2 caractérisé en ce que A représente en moyenne statistique pour 4 à 10 moles% des radicaux divalents de formule II.

4. Polyester selon les revendications 1 à 3, caractérisé en ce qu'un radical divalent d'un alcane en $C_3$ à $C_6$ représenté par G est un radical linéaire.

5. Polyester selon les revendications 1 à 4, caractérisé en ce qu'un radical alkyle ou alcényle représenté par R est un radical ramifié.

6. Polyester selon les revendications 1 à 5, caractérisé en ce que R est un radical alcényle ayant de 6 à 18 atomes de carbone.

7. Procédé de préparation du polyester dispersable dans l'eau selon la revendication 1, procédé caractérisé en ce que l'on fait réagir de manière connue, à des températures de 100 à 280 °C, un mélange de 80 à 97 moles% d'acide téréphtalique ou d'un dérivé approprié de cet acide et de 3 à 20 moles% d'un acide alkylsuccinique de formule III

$$\begin{array}{l} R-CH-COOH \\ \quad\;\; | \\ \quad\;\; CH_2-COOH \end{array} \qquad (III)$$

dans laquelle R a la signification indiquée en revendication 1, ou d'un dérivé approprié de celui-ci, avec un mélange de 30 à 90 moles% d'un alcane-diol à chaîne linéaire ou ramifiée en $C_3$ à $C_6$, 10 à 30 moles% d'un polyéthylène-glycol ayant une masse moléculaire moyenne de 1 000 à 3 000, et le cas échéant 0 à 50 moles% d'éthylène-glycol.

8. Procédé selon la revendication 7 caractérisé en ce qu'on utilise l'alcane-diol en $C_3$ à $C_6$ et l'éthylène-glycol dans une proportion molaire pouvant aller jusqu'à trois fois celle indiquée à la revendication 7.

9. Dispersion aqueuse d'un polyester formée de 5 à 33 1/3 % en poids d'un polyester dispersable de composition donnée à la revendication 1 avec 95 à 66 2/3 % en poids d'eau.

10. Dispersion aqueuse d'un polyester selon la revendication 9, caractérisée en ce qu'elle contient en outre de 0 à 5 % en poids d'un émulsionnant non ionogène.

11. L'utilisation d'un polyester dispersable selon la revendication 1 ou d'une dispersion aqueuse de celui-ci selon la revendication 9 pour rendre hydrophiles, antistatiques et anti-salissantes des matières fibreuses formées en totalité ou en grande partie de fibres hydrophobes.